# NEUE EUROPÄISCHE PATENTSCHRIFT

(11) **EP 1 392 929 B2**
(45) Veröffentlichungstag und Bekanntmachung des Hinweises auf die Entscheidung über den Einspruch: **06.06.2012**
(45) Hinweis auf die Patenterteilung: 17.05.2006
(21) Anmeldenummer: 02742790.5
(22) Anmeldetag: 04.06.2002
(51) Int. Cl.: E01B 7/10

(54) **HERZSTÜCK FÜR WEICHEN UND VERFAHREN ZU SEINER HERSTELLUNG**
FROG FOR POINTS AND A METHOD FOR PRODUCING THE SAME
COEUR DE CROISEMENT POUR AIGUILLAGES ET SON PROCEDE DE REALISATION

(30) Priorität: 05.06.2001 DE 10126989
(43) Veröffentlichungstag der Anmeldung: 03.03.2004
(73) Patentinhaber: Josch Strahlschweisstechnik GmbH, 06193 Teicha (DE); pro-beam AG & Co. KGaA, 82152 Planegg (DE); DB Netz AG, 60486 Frankfurt (DE)
(72) Erfinder: SOBISCH, Götz, 06193 Teicha (DE); HEIM, Armin, CH-8280 Kreuzlingen (CH)
(74) Vertreter: Ostertag, Ulrich
(86) Internationale Anmeldenummer: PCT/DE2002/002031
(87) Internationale Veröffentlichungsnummer: WO 2002/099194

(56) Entgegenhaltungen:
- EP-A- 0 112 063
- EP-A- 0 269 603
- WO-A-98/42473
- WO-A1-98/07928
- DE-B- 1 149 577
- DE-C1- 19 621 019
- DE-U- 1 770 234
- FR-A- 2 800 756
- US-A- 5 704 570
- US-A- 5 820 702

## Beschreibung

Die Erfindung bezieht sich auf eine Herzstückspitze eines starren Herzstückes für Weichen, die in Gleisanlagen Anwendung finden, und auf ein Verfahren zu seiner Herstellung.

Es ist allgemein bekannt, in Schienensträngen von Gleisanlagen, um die auf den Gleisanlagen fahrenden Züge in eine andere Richtung zu lenken, zwischen den Schienensträngen Weichen einzusetzen.
Diese Weichen bestehen aus den funktionsbestimmenden Elementen wie einzelne Gleisschienenstücke, dem Herzstück mit Fahrschiene und Radlenker und der Weichenzunge. Diese funktionsbestimmenden Elemente unterliegen besonders hohen Belastungen und Verschleiß.
Das Herzstück der Weiche, insbesondere die sich verjüngende Herzstückspitze, wird meistens aus Vollschienen durch entsprechende mechanische Bearbeitungen hergestellt und dann mittels Abbrennstumpfschweißung mit den sich anschließenden Regelschienen verbunden.
Sowohl die einzelnen Gleisschienenstücke als auch das Herzstück und die Weichenzunge sind funktionsbestimmende Elemente einer jeden Weiche und unterliegen besonderen Belastungen.
Insbesondere das starre Herzstück einer Weiche ist hohen Stoß- und wechselhaften Belastungen ausgesetzt, so dass die Fahrflächen der Herzstückspitzen bekannterweise aus einem hoch verschleißfesten und aushärtbaren Stahl hergestellt werden. Die Beanspruchung von Herzstückspitzen ist besonders hoch beim Radüberlauf von der Flügelschiene auf die Spitze - auch umgekehrt - und nimmt mit größeren Achslasten und vor allem mit Erhöhung der Fahrgeschwindigkeit unverhältnismäßig zu, so dass an der Auftreffspitze größere Deformationen auftreten können, die die Lebensdauer eines Herzstückes beträchtlich herabsetzen, insbesondere wenn die geforderte vertikale Elastizität nicht vorhanden ist.

So wurde mit der EP 02 69 603 B 1 ein Verfahren zur Herstellung von Weichenherzstücken oder Schienenstücken im Randüberlaufbereich von Weichen vorgeschlagen, wobei die Radlaufflächen durch Sprengplattieren oder Elektronenstrahlschweißung oder Verbundwalzen auf den Grundkörper aus gut schweißbarem Stahl, insbesondere einen Grundkörper mit ≤ 0,24 % C, ≤ 0,04 % P bzw. S ≤ 0,65 % Si und ≤ 1,7 % Mn, aufgebracht werden.

Die alternativ vorgeschlagenen Methoden des Aufbringens einer Verschleißschicht auf die Fahrflächen von starren Herzstücken verdeutlichen, dass das Aufbringen und damit die flächige, metallische Verbindung mit erheblichen Problemen behaftet ist und bisher praktisch zu keiner optimalen Lösung geführt hat.

Beim Sprengplattieren soll die Verbindung durch einen kurzzeitig einwirkenden hohen Druck erreicht werden. Da in der Bindezone die Schmelztemperatur nicht erreicht wird, spricht man auch von einem Pressschweißverfahren, welches jedoch mit dem Nachteil behaftet ist, dass es zu keiner qualitätsgerechten Verbindung zwischen dem Grundkörper und der aufzutragenden Verschleißschicht kommt und die alternativ vorgeschlagene Elektronenstrahlschweißung verlangt aus Gründen der Schweißbarkeit, wenn es zu einer qualitätsgerechten Verbindung von Grundkörper und Auftragsschicht kommen soll, geringe Kohlenstoffgehalte für den Grundwerkstoff.
Ferner ist nachteilig, dass derart hergestellte Herzstücke zusätzlich einer mechanischen Bearbeitung unterzogen werden müssen.

Es sei auch auf die US-A-5,704 570 verwiesen, mit der ein Herzstückspitzenelement für Weichenanlagen bekannt geworden ist, welches aus einem Schienenteilpaar aus hochkohlenstoffhaltigem Stahl mit Kopfteil und Fußteil und einem zwischenliegenden zentralen Auflageabschnitt besteht, wobei jedes Schienenteil mit einer Hohlwölbung an einer Seitenfläche ausgebildet ist. Ferner ist zwischen den Schienenteilpaaren eine Verstärkungsplatte vorgesehen, welche aus dem gleichen Werkstoff wie die Schienenteilpaare besteht und mit diesen im Kopf- und Fußteil des Schienenteilpaares verbunden ist.
Nachteilig bei dieser Lösung ist, dass nach dem Schweißvorgang, einem Elektronenschweißvorgang, eine Wärmebehandlung erforderlich wird, um eine homogene Feinperlitstruktur zu erreichen und ferner, dass die Flügelschienenelemente durch Verschweißen ihrer Fußteile zu einem Körper verbunden und mit Durchgangsschrauben und Muttern miteinander verschraubt sind, was einen hohen Fertigungsaufwand erfordert und schließlich wird dadurch kein freies Schrumpfen der zu verbindenden Teile erreicht.
Es verbleiben im Schienenteilpaar Restspannungen, die nach dem Schweißvorgang eine Wärmebehandlung erforderlich machen, um diese Restspannungen auszugleichen.

Die FR-A-2 800 756 beschreibt ein Verbindungsverfahren von zwei nebeneinander liegenden Elementen einer Weiche, welche mittels Laserstrahlschweißung verbunden werden, wobei die zu verbindenden Elemente, Teile von Regelschienen, so miteinander verbunden werden, dass zwischen den beiden zu verbindenden Elementen ein Zwischenraum, eine Fuge, vorhanden ist, über die die beim Schweißvorgang entstehenden Gase geführt und durch Öffnungen in den Stegen der Elemente abgeleitet werden. Ferner bedarf es auch hier nachfolgender Wärmebehandlungen, um die vorhandenen Spannungen weitestgehend auszugleichen.

Der Erfindung liegt daher die Aufgabe zu Grunde, eine Herzstückspitze für starre Herzstücke von Weichen und ein Verfahren zu seiner Herstellung zu entwickeln, welches kostengünstig ist und mit dem die Nachteile des Standes der Technik beseitigt werden.

Erfindungsgemäß wird die Aufgabe mit den Merkmalen der Ansprüche 1 und 4 gelöst.

Besondere Ausgestaltungen und vorteilhafte Lösungen sind Gegenstand der abhängigen Ansprüche.

So wurde erfindungsgemäß eine Herzstückspitze für Weichen geschaffen, welche zu einem starren Herzstück verbunden und ausgebildet ist und aus zwei Regelschienenhälften besteht, die im Schienenkopf und im Schienenfuß, unter Einsatz von Zwischenlagen, im Bereich der Herzstückspitze mittels einer Elektronenstrahlschweißung verbunden sind und in seinem Stegbereich einen Luftspalt aufweist, damit die Querschrumpfung beim Schweißen nicht behindert wird.
Die Schweißnahttiefe im Schienenkopf beträgt ca. 30 mm und im Schienenfuß ca. 25 mm.

Bei den zum Einsatz kommenden Regelschienenhälften handelt es sich um zwei Teile, bestehend aus handelsüblichen Standard-Regelschienen, vergütet oder nicht vergütet, die durch eine innenseitige Bearbeitung im Kopf- und Fußbereich entsprechend der günstigsten Form für das Elektronenstrahlschweißen bearbeitet sind.

In einer bevorzugten Ausführungsform können die zu fügenden Regelschienenhälften auch durch einen Walzvorgang hergestellt werden. Durch einen nachfolgenden mechanischen Bearbeitungsvorgang erhalten die zu fügenden Flächen der Regelschienenhälften eine metallisch blanke und oxidfreie Oberfläche, so dass eine qualitätsgerechte Verbindung durch Elektronenstrahlschweißung erreicht wird.

Der vorgesehene Luftspalt zwischen den beiden zu verschweißenden Regelschienenhälften gewährleistet ein freies Schrumpfen der Schweißnähte im Kopf- und Fußbereich der gefügten Regelschienenhälften, so dass im Ergebnis eine Herzstückspitze, bestehend aus zwei Regelschienen, vorliegt, welches spannungsfrei ist und auch keine Restspannungen mehr in Querrichtung aufweist.

Die erfindungsgemäße Lösung wird wesentlich dadurch charakterisiert, dass zwei einseitig bearbeitete Regelschienenhälften, hergestellt aus handelsüblichen, vergüteten oder nicht vergüteten Regelschienen, im Schienenkopf- und im Schienenfußbereich mittels Elektronenstrahlschweißung miteinander verbunden sind. Dabei ist wesensbestimmend, dass im Stegbereich der zu schweißenden Regelschienenhälften ein Luftspalt vorhanden ist, welcher sicherstellt, dass ein freies Querschrumpfen der Schweißnähte ohne Spannungserhöhung ermöglicht wird.

Dieser Luftspalt wird dadurch herausgebildet, dass im Bereich der Elektronenstrahlschweißung, also im Schienenkopf- und im Schienenfußbereich Zwischenlagen angeordnet sind, die aus einem C-freien Material, beispielsweise Rein- oder Weicheisen, bestehen und eine Materialdicke bis zu 1,5 mm besitzen.
Durch die Zulegierung der Zwischenlagen wird das Dehnvermögen in den Schweißnähten gesteigert, wodurch wiederum Kerbschlagzähigkeitswerte in den Schweißnähten erreicht werden, die einer Rissbildung in dem Schweißnahtbereich beim bestimmungsgemäßen Einsatz der so hergestellten Herzstückspitzen von Herzstücken entgegenwirken und somit Rissbildungen ausgeschlossen werden.

Nach einer diskontinuierlichen Vorwärmung der zu verschweißenden Spitzenbereiche der beiden Regelschienenhälften, welche unter Vakuum stattfindet, werden diese Regelschienenhälften mittels Elektronenstrahlschweißung am Kopf und am Fuß miteinander verschweißt. Dieser Vorgang findet gleichfalls unter Vakuum statt, wobei die Elektronenstrahlführung sowohl horizontal als auch vertikal erfolgen kann. Dies wird vorrangig abhängig sein von der jeweiligen Schweißnahtlänge und den chemischen Zusammensetzungen der Regelschienen, aber unter Beachtung der Fremdentgasung beim unmittelbaren Schweißvorgang ist es vorteilhaft, den Elektronenstrahl geneigt, also unter einem bestimmten Winkel zu führen, das heißt, der Elektronenstrahl wird in steigender Position während der Schweißvorgänge geführt.

Der Elektronenstrahl selbst arbeitet mit einer speziellen Leistungsdichteverteilung des Energiestrahles, so dass die Regelschienenhälften porenfrei sowie oxidfrei verschweißt sind. Ferner werden dadurch parallele Schweißnähte erreicht, es entstehen keine Winkelschrumpfungen in der Schweißnaht, und die gewählte Leistungsdichte erzeugt spezielle Dampfkapillare, so dass das bei dem Schweißvorgang entstehende Gase ungehindert aus diesem Bereich austreten können.

Charakterisiert wird die spezielle Leistungsdichteverteilung durch eine Strahlablenkung mit einer Frequenz von 900 Hz, Auslenkamplituden von 0,3 mm und durch kontrollierte, sich stetig ändernde Schweißkapillare.

Wesentlich für das Verfahren ist ferner, dass in Abhängigkeit der C- und Mn-Gehalte der zu schweißenden Regelschienenhälften die Schweißnahtlage bzw. die Position des Elektronenstrahles zu den zu schweißenden Teilen bestimmt wird. So begründen höhere C- und Mn-Gehalte einen größeren Neigungswinkel der zu schweißenden Teile bzw. des geführten Elektronenstrahles und kleinere C- und Mn-Gehalte geringere Neigungswerte.

Ferner ist wesensbestimmend, dass die Durchwärmzeiten der zu schweißenden Regelschienenhälften gleichfalls in Abhängigkeit von dem jeweiligen C- und Mn-Gehalt bestimmt werden.
So werden Regelschienenhälften mit einem C-Gehalt von bis zu 0,6 % auf 320 °C und Regelschienenhälften mit einem C-Gehalt bis zu 0,8 % auf 420 °C diskontinuierlich vorgewärmt, und die Durchwärmzeiten sind so gewählt, dass die zu verschweißenden beiden Spitzenbereiche vor Beginn des Elektronenstrahlschweißvorganges eine Temperatur von 320 bis 400 °C im Wurzelbereich der Nahtfuge besitzen.

Kern der vorliegenden Erfindung ist somit, dass zwei aus handelsüblichen Standard-Regelschienen hergestellte Regelschienenhälften in ihren Spitzenbereichen im Schienenkopf und im Schienenfuß mittels Elektronenstrahlschweißung zur Herausbildung einer Herzstückspitze eines starren Herzstückes miteinander verbunden werden, dabei Schweißnahttiefen von 25 bis 35 mm realisiert werden und im Stegbereich der zu verbindenden Regelschienenhälften, begrenzt durch die obere und untere Schweißnaht, ein Luftspalt vorhanden ist, der ein freies Querschrumpfen der beiden Spitzenhälften gewährleistet. Die Schweißverbindung wird hergestellt, indem die beiden Schweißnähte gleichzeitig durch Verwendung von zwei Elektronenstrahlen geschweißt werden.

Dabei gehört ebenfalls zur Erfindung, dass durch eine spezielle Elektronenstrahlführung und einer speziellen Leistungsdichteverteilung des Elektronenstrahles Schweißverbindungen erzielt werden, die in ihren schweißtechnischen und festigkeitsmäßigen Eigenschaften den werkstoffmäßigen Qualitätsmerkmalen der Grundwerkstoffe der Regelschienenhälften entsprechen und durch die Anordnung von Zwischenlagen zwischen den zu fügenden Flächen das Zähigkeitsverhalten der Schweißnähte erhöht wird.

Mit dieser neuen technischen Lehre werden wesentliche Vorteile erreicht, da handelsübliche Standard-Regelschienen zum Einsatz kommen, somit bei der Herstellung von Herzstückspitzen für Weichen sowohl die fertigungstechnischen Herstellungskosten als auch der Materialaufwand wesentlich verringert werden. Nacharbeiten der Schweißnähte sind nicht erforderlich und der geführte, geregelte Herstellungsprozess, von der Durchwärmung über den unmittelbaren Schweißvorgang bis zur Abkühlung gewährleistet, dass aufwendige Nachrichtarbeiten und ein Spannungsfreiglühen entfallen. Ferner ist von Vorteil, dass so hergestellte Herzstückspitzen für starre Herzstücke problemlos in Schienensträngen von Gleisanlagen eingesetzt und mit diesen verschweißt werden können, da im Schweißbereich der Bauteile diese eine gleiche werkstoffmäßige Zusammensetzung besitzen.

Nachfolgend wird die Erfindung anhand eines Ausführungsbeispieles näher erläutert.

Die dazugehörige Zeichnung zeigt in
- Figur 1:: eine aus zwei Regelschienenhälften hergestellte Herzstückspitze einer Weiche
- Figur 2:: die fertig geschweißte Herzstückspitze mit einem Ausschnitt im Spitzenbereich der starren Herzstückspitze
- Figur 3:: Schnittdarstellung der beiden mit dem Elektronenstrahl verschweißten Regelschienenhälften
- Figur 4:: zwei gefügte Schienenspitzenhälften mit den erfindungsgemäßen Zwischenlagen in einer Schnittdarstellung.

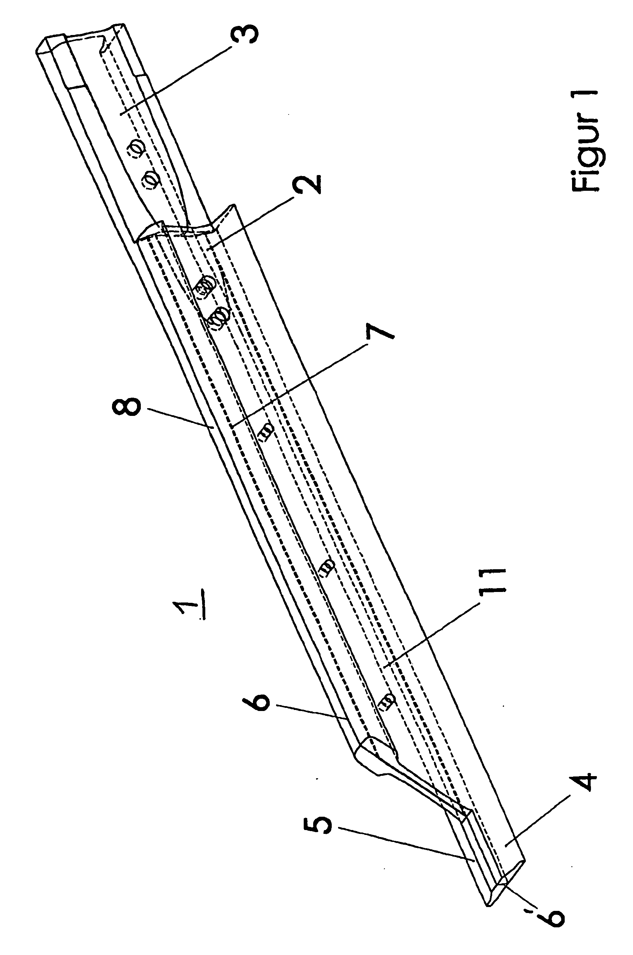

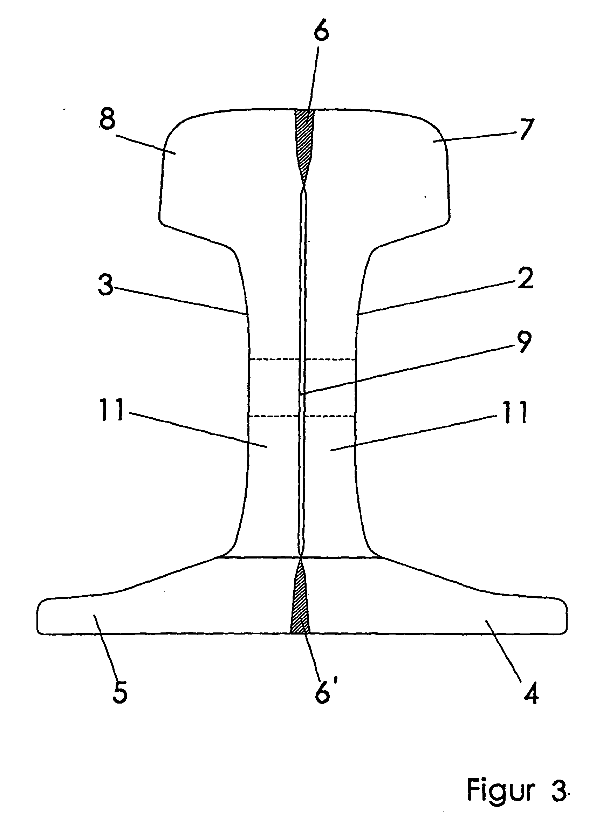

Die Figuren 1 bis 3 zeigen dabei den generellen technischen Hintergrund und entsprechen nicht der Erfindung.

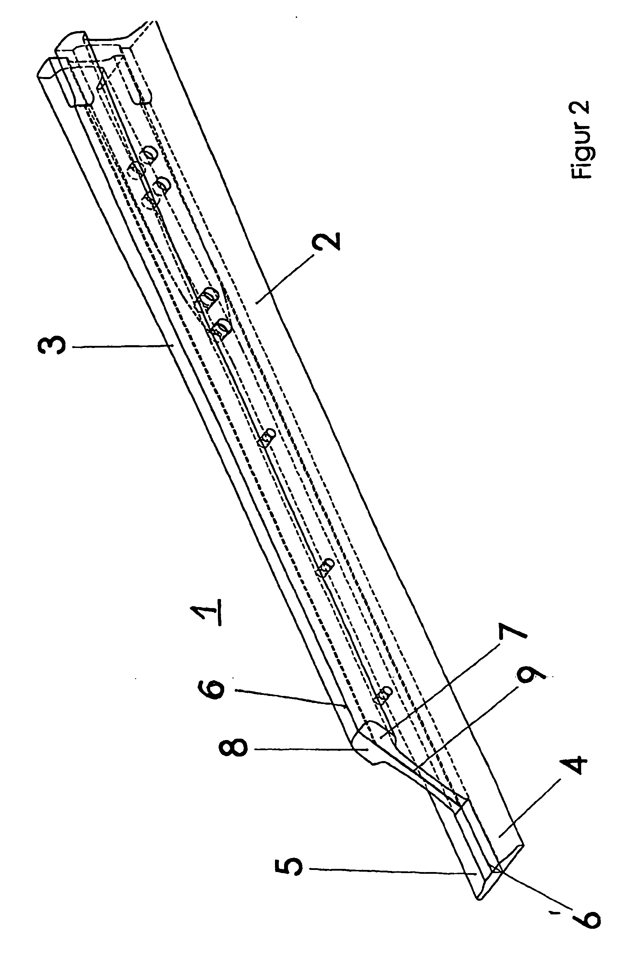

Eine aus zwei Regelschienenhälften 2, 3 hergestellte Herzstückspitze 1 als Bestandteil von starren Herzstücken, welche in Weichen von Gleisanlagen eingesetzt werden kann, ist in der Figur 1 dargestellt, aus der deutlich wird, wie die beiden Regelschienenhälften 2, 3 längsseitig, somit zur Spitze der Herzstückspitze 1, verjüngend ausgebildet sind. Im Bereich der Regelschienenhälftenköpfe 7, 8 und im Bereich der Regelschienenhälftenfüße 4, 5 sind die Regelschienenhälften 2, 3 mittels Schweißnähten 6, 6' verbunden, die durch Elektronenstrahlschweißung hergestellt werden.
Mit der Darstellung nach Figur 2, bei der der Spitzenbereich "ausgeschnitten" ist, wird verdeutlicht, wie die Regelschienenhälften 2, 3 in ihren Kopfbereichen 7, 8 und in ihren Fußbereichen 4, 5 aneinander liegen und zwischen diesen Berührungsflächen ein Luftspalt 9 im Stegbereich der Herzstückspitze 1 ausgebildet ist.
Dieser Luftspalt 9 wird zum Kopfbereich bzw. zum Fußbereich der Herzstückspitze 1 durch die Schweißnähte 6, 6' begrenzt, deren Nahttiefen im Bereich von 25 bis 35 mm liegen und deren Schweißnahtlängen bis zu 2000 mm problemlos schweißbar sind.

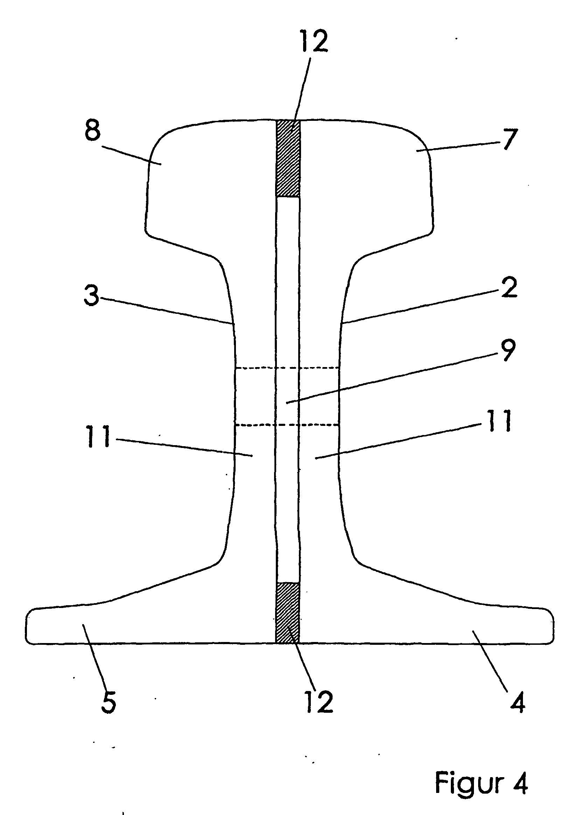

Im Ergebnis liegt eine fertige Herzstückspitze 1 vor, wie in der Figur 4 gezeigt, bei der die Regelschienenhälften 2, 3 mittels der Schweißnähte 6, 6' verbunden und der Luftspalt 9 im Bereich der Stege 11 der beiden geschweißten Regelschienenhälften 2, 3 vorgesehen ist.

Die Herausbildung des Luftspaltes 9 ergibt sich erfindungsgemäß aus der Anordnung von Zwischenlagen 12, die sowohl im Bereich der Regelschienenkopfhälften 7, 8 als auch im Bereich der Regelschienenfußhälften 4, 5 vorgesehen sind, wie in Figur 4 gezeigt.
Dabei entsprechen die Abmaße der Zwischenlagen 12 in ihrer Breite dem Maß des Luftspaltes 9, somit bis zu 1,5 mm und in ihrer Höhe, den Nahttiefen der Schweißnähte 6, 6', somit im Bereich von 25 bis 35 mm liegend.

In Vorbereitung für die Schweißvorgänge werden die zu verschweißenden Regelschienenhälften 2, 3 über Verbindungs- und Arretierungselemente, die Aufnahme in den Stegbohrungen 10 finden, verbunden. Dies in der Art und Weise, dass bei den Regelschienenhälften 2, 3 im Bereich ihrer Regelschienenhälftenköpfe 7, 8 und ihrer Regelschienenhälftenfüße 4, 5, wie im Ausführungsbeispiel gemäß Figur 4 beschrieben, zwischen ihren Berührungsflächen die Zwischenlagen 12 angeordnet sind.
In diesen gefügten Positionen werden die Regelschienenhälften 2, 3 mittels Elektronenstrahlschweißung im Fußbereich als auch im Kopfbereich geschweißt.

Bevor der Schweißvorgang eingeleitet wird, werden die zu schweißenden Regelschienenhälften 2, 3 in einem diskontinuierlichen Vorgang und in Abhängigkeit vom C-Gehalt der Regelschienenhälften 2, 3 vorgewärmt.
Bei einem C-Gehalt bis zu 0,6 % erfolgt eine Vorwärmung auf 320 °C. Bei einem C-Gehalt bis zu 0,8 % werden die Regelschienenhälften 2, 3 auf 420 °C vorgewärmt.
Die Vorwärmung erfolgt unter Vakuum und ist zeitlich so begrenzt und abgestimmt, dass Durchwärmungsgrade von 320° bis 400 °C erreicht werden.
Der nachfolgende Elektronenstrahlschweißvorgang erfolgt gleichfalls unter Vakuum und läuft derart ab, dass die zu schweißenden Regelschienenhälften 2, 3 gleichzeitig in ihren Fuß- und Kopfbereichen durch Verwendung von zwei Elektronenstrahlen geschweißt werden.

Die Schweißführung des Elektronenstrahles erfolgt sowohl horizontal als auch vertikal, wobei in bevorzugter Weise die Elektronenstrahlführung in geneigter Weise, also unter einem bestimmten Steigungs / Neigungswinkel erfolgt.
Der Elektronenstrahl besitzt die bereits beschriebene spezielle Leistungsdichteverteilung, die durch die Strahlablenkung und durch die Auslenkamplitude bestimmt ist, und durch eine hochfrequente Oszillation des Elektronenstrahles wird eine Gleichverteilung der technologisch mechanischen Eigenschaften garantiert. Durch die sich ständig ändernden Schweißkapillaren wird gewährleistet, dass Fremdgase unmittelbar bei dem Schweißvorgang entweichen können, und ferner werden durch die spezielle Leistungsdichteverteilung des Elektronenstrahles parallele Schweißnähte ausgebildet, und der vorgesehene Luftspalt 9 in der Herzstückspitze 1 gewährleistet ein freies Querschrumpfen der Schweißnähte.

Durch die gewählte, vom Kohlenstoff abhängige diskontinuierliche Vorwärmung, wird ein Wärmestau oder eine partielle Überhitzung der zu schweißenden Werkstoffe vermieden, und durch die Vorwärmung im Vakuum werden oxidfreie Fügestellen erreicht, die qualitätsgerechte Schweißverbindungen garantieren, ohne dass die technologisch mechanischen Eigenschaften eines so hergestellten starren Herzstückes negativ beeinflusst werden.

Die Ausbildung und Lage der Schweißnähte 6, 6'schaffen gleichfalls die Voraussetzungen einer problemlosen Ultraschallprüfung, wodurch ein weiterer Vorteil eintritt.

## Patentansprüche

1. Verfahren zur Herstellung einer starren Herzstückspitze für Weichen, die in Gleisanlagen Anwendung finden und mit den Schienensträngen von Gleisanlagen verschweißt sind, wobei die Herzstückspitze aus mechanisch bearbeiteten Regelschienenhälften besteht, die im Kopf und Fußbereich mittels Elektronenstrahlschweißung verbunden sind und zwischen den Stegen ein Luftspalt vorgesehen ist, **dadurch gekennzeichnet, dass**,
- die zueinander verspannten Regelschienenhälften in Abhängigkeit vom C-Gehalt diskontinuierlich vorgewärmt werden,
- in Abhängigkeit vom C-Gehalt der Elektronenstrahl horizontal, unter einem bestimmten Winkel geneigt bzw. vertikal geführt wird,
- der Elektronenstrahl eine spezielle Leistungsdichteverteilung besitzt, **gekennzeichnet durch** eine Strahlablenkung mit einer Frequenz von 900 Hz und Auslenkamplituden von 0,3 mm, der eine sich stetig ändernde Schweißkapillare erzeugt,
- die diskontinuierliche Vorwärmung und Elektronenstrahlschweißung unter Vakuum erfolgt,
- im Kopf- und Fußbereich der Regelschienenhälften zur Ausbildung des Luftspaltes Zwischenlagen zum Einsatz kommen, die aus einem C-freien Material bestehen eine Materialdicke bis 1,5 mm besitzen, das Dehnungsverhalten der Schweißnähte steigern und die Kerbschlagzähigkeiten erhöhen und
- die Kopf- und Fußbereiche der beiden Regelschienenhälften gleichzeitig verschweißt werden.

2. Verfahren nach Anspruch 1, **dadurch gekennzeichnet, dass**
die diskontinuierliche Vorwärmung bei Werkstoffen mit einem C-Gehalt bis 0,6 % bei 320 °C und bei Werkstoffen mit einem C-Gehalt bis 0,8 % bei 420 °C abläuft und Durchwärmtemperaturen, in Abhängigkeit von den Durchwärmzeiten, im Bereich von 320° bis 400° C erzielt werden.

3. Verfahren nach den Ansprüchen 1 und 2, **dadurch gekennzeichnet, dass**
die Herstellung der Herzstückspitze durch Elektronenstrahlschweißung auf einer Elektronenstrahlschweißmaschine mit zwei horizontal angeordneten Schweißköpfen erfolgt.

4. Herzstückspitze für Weichen, bestehend aus zwei Regelschienenhälften (2; 3), die in Gleisanlagen Anwendung finden und mit Schienensträngen von Gleisanlagen verschweißt sind, wobei die Herzstückspitze als starre Herzstückspitze ausgebildet ist und zwischen den Stegen (11) der Regelschienenhälften (2; 3) ein Luftspalt (9) vorhanden ist, hergestellt durch das Verfahren nach Anspruch 1, **dadurch gekennzeichnet, dass**
der Luftspalt (9) mit einem Breitenmaß bis 1,5 mm ausgebildet ist und zwischen den Regelschienenhälftenköpfen (7; 8) und den Regelschienenhälftenfüßen (4; 5) der zu verschweißenden Regelschienenhälften (2; 3) zur Ausbildung des Luftspaltes (9) Zwischenlagen (12) aus einem C-freien Material angeordnet sind, deren Höhenmaße im Bereich von 25 bis 35 mm und deren Dickenmaße zwischen 0,2 mm und 1,5 mm liegen.

5. Herzstückspitze nach Anspruch 4, **dadurch gekennzeichnet, dass**
die Zwischenlagen (12) aus einem C-freien Werkstoff wie Reineisen/Weicheisen oder anderen Legierungen, z. B. warmfeste und hoch warmfeste Werkstoffe, die den Prozess positiv unterstützen, bestehen.

6. Herzstückspitze nach den Ansprüchen 4 und 5, **dadurch gekennzeichnet, dass**
die Innenfläche der Stege (11) der Regelschienenhälften (2; 3) vollflächig ausgebildet sind.

## Claims

1. Process for the manufacture of a rigid points diamond for points, which are used in tracks and are welded to the lengths of rail of the track, with the points diamond consisting of machined standard rail half-sections, which are welded together in the areas of the head and the foot of the rail by means of electron beam welding and have an air gap between the webs **characterised in that**,
- the braced-together standard rail half-sections are preheated discontinuously depending on their C-content,
- depending on the C-content, the electron beam is guided horizontally, at a certain angle of inclination or verti cally,
- the electron beam has a special power density distribution device **characterised by** a beam deflector with a frequency of 900 Hz and a deflection amplitude of 0.3 mm, which creates a continuously changing weld capillary,
- the discontinuous preheating and electron beam welding is carried out under vacuum,
- in the head and foot areas of the standard rail half-sections intermediate layers for forming the air gap are used, which consist of a C-free material, have a thickness of up to 1.5 mm and increase the stress-strain behaviour of the welds and the impact toughness and
- the head and foot areas of both standard rail half-sections are welded concurrently.

2. Process in accordance with Claim 1, **characterised in that** the discontinuous preheating takes place at 320°C in the case of materials with a C-content of up to 0.6 % and at 420 °C in the case of materials with a C-content of up to 0.8 %, and soaking temperatures, depending on the soaking times, in the ränge of 320° to 400°C are created.

3. Process in accordance with Claims 1 and 2, **characterised in that** the manufacture of the points diamond piece by electron beam welding is carried out on an electron beam welding machine with two horizontally arranged welding heads.

4. Points diamond piece for points consisting of two standard rail half-sections (2; 3), which are used in tracks and are welded to the lengths of rail of the track, with the points diamond piece is formed as a rigid points diamond piece and an air gap (9) is present between the webs (11) of the standards rail half-sections (2; 3), made using the process in accordance with Claim 1, **characterised in that** the air gap (9) has a width of up to 1.5 mm and intermediate layers (12) for forming the air gap made from C-free material are positioned between the standard rail half-section heads (7; 8) and the standard rail half-section feet (4; 5) of the standard rail half-sections (2; 3) to be welded together, the height of which is in the ränge of 25 to 35 mm and the thickness of which is between 0.2 mm and 1.5 mm.

5. Points diamond piece in accordance with Claim 4, **characterised in that**
the intermediate layers (12) consist of a C-free material such as technically pure iron/soft iron or other alloys, e.g. temperature-resisting and high temperature-resisting materials that positively support the process.

6. Points diamond piece in accordance with Claims 4 and 5, **characterised in that**
the inside surface of the webs (11) of the standard rail half-sections (2; 3) are solid over their whole surface.

## Revendications

1. Procédé permettant de produire une pointe du coeur de croisement rigide pour des systèmes d'aiguillage utilisés dans les voies ferrées et soudés avec des files de rails de voies ferrées, la pointe du coeur de croisement tant composée de moitiés de rail standard traitées par voie mécanique et assemblées, dans les zones supérieure et inférieure, au moyen d'un soudage par faisceau d'électrons et un espace étant prévu entre les âmes de rail, **caractérisé par le fait que**,
- les moitiés du rail standard croisillonnées sont préchauffées de façon discontinue en fonction de la teneur en C,
- le faisceau d'électrons est guidé à l'horizontale, incliné à un certain angle ou guidé à la verticale en fonction de la teneur en C,
- le faisceau d'électrons présente une répartition spécifique de la densité de puissance, **caractérisée par** une déflexion du faisceau à une fréquence de 900 Hz et à des amplitudes de sortie de 0,3 mm, produisant un capillaire de soudage constamment modifié,
- le préchauffage discontinu et le soudage par faisceau d'électrons sont effectués sous vide,
- dans les zones supérieure et inférieure des moitiés du rail standard, sont utilisées des pièces intermédiaires pour former le dit espace, composées d'un matériau exempt de C et ayant une épaisseur ne dépassant pas 1,5 mm, améliorant la tenue à la dilatation des soudures et augmentant les résiliences et
- les zones supérieure et inférieure des deux moitiés du rail standard sont en même temps soudées.

2. Procédé selon la revendication 1, **caractérisé par le fait que** le préchauffage discontinu est effectué sur les matériaux présentant une teneur en C atteignant 0,6 % à 320 °C et sur les matériaux présentant une teneur en C atteignant 0,8 % à 420 °C et que des températures de réchauffage comprises entre 320° et 400° C sont obtenues en fonction des durées de réchauffage.

3. Procédé selon les revendications 1 et2, **caractérisé par le fait que** la fabrication de la pointe du coeur de croisement s'effectue au moyen d'un soudage par faisceau d'électrons sur une machine à souder par faisceau d'électrons, dotée de deux têtes de soudage disposées à l'horizontale.

4. Pointe du coeur de croisement, composée de deux moitiés de rail Standard (2; 3), pour systèmes d'aiguillage utilisés dans les voies ferrées et soudés avec des files de rails de voies ferrées, la pointe du coeur de croisement étant rigide et un espace (9) étant prévu entre les âmes (11) des moitiés du rail standard (2; 3), obtenue par exécution du procédé selon la revendication 1, **caractérisé par le fait que** le dit espace (9) présente une largeur maximum de 1,5 mm et des pièces intermédiaires (12) exempts de C pour former le dit espace, dont la hauteur se situe entre 25 et 35 mm et l'épaisseur entre 0,2 mm et 1,5 mm, sont prévues entre les parties supérieures (7; 8) et les parties inférieures (4; 5) des moitiés du rail standard à souder (2; 3).

5. Pointe du coeur de croisement selon la revendication 4, **caractérisée par le fait que**
les pièces intermédiaires (12) sont composées d'un matériau exempt de C, comme le fer pur/fer doux ou d'autres alliages, notamment des matériaux résistants ou très résistants à la chaleur, facilitant le processus.

6. Pointe du coeur de croisement selon les revendications 4 et 5, **caractérisée par le fait que**
la surface intérieure des âmes (11) des moitiés du rail standard (2; 3) est formée sur toute la surface.
